# EUROPEAN PATENT APPLICATION

(11) **EP 2 840 195 A1**
(43) Date of publication of application: **25.02.2015**
(21) Application number: 13398013.6
(22) Date of filing: 23.08.2013
(51) Int. Cl.: E04B 1/76

(54) **Thermal insulation modular panels for external coating and assembling method thereof**

(71) Applicant: Semedo, Armandino Pelica, 2810-327 Feijo (PT)
(72) Inventor: Semedo, Armandino Pelica, 2810-327 Feijo (PT)
(74) Representative: Magalhães Simões, José Raúl

(57) **Abstract**

This invention refers to a thermal insulation modular panel for exterior insulation, as well as its method of installation.

The referred panel consists of a thermal insulation panel (1), lined with a reinforcing mesh (2) on the exterior surface which is fixed to it by means of cement based mortar (3), of which at least one of the edges (4, 5, 6, 7) is a "male" edge where the reinforcing mesh (2) extends beyond the edge of the thermal insulation panel (1) and having an area on edges (4, 5, 6, 7) where the reinforcing mesh (2) is not bonded to the thermal insulation panel (1) by means of cement based mortar (3).

## Description

### OBJECT OF THE INVENTION

This invention relates to the specific association, assembly and incorporation of the materials that make up a lightweight modular panel (module) used for external thermal insulation (ETICS) of walls and vertical facades or horizontal and sloping surfaces, as long as the latter are not exposed to rain.

The pre-fabricated module is made up of a thermal insulation panel with a reinforced base coat applied to the exterior surface of the panel by means of a cement based bonding agent. The thermal insulation panel may contain negatives for placement and countersinking of the mechanical anchors on the thermal insulation panels, depending on conditions of the substrate, wind action and own-weight of the insulation system.

### FIELD OF THE INVENTION

Due to increasing concern in the reduction of energy consumption by air conditioning systems in the residential and tertiary sectors, the high cost and degree of specialization of labour required to implement the ETICS systems and the growing need for building rehabilitation allows for the pre-fabrication of ETICS modules, with the characteristics of this invention, to meet increasing demand in a market with a wide range of separate materials available to carry out external thermal insulation.

The pre-fabrication of modules, object of this invention, for installation of the thermal insulation system (ETICS) allows:
- A significant reduction in the number of operations that have to be carried out during on-site installation as opposed to traditional methods;
- Greater speed and reduced complexity resulting in greater efficiency during installation in-situ;
- Minimizing installation errors;
- Minimizing waste and residual material at the location of application;
- Good fit between modules with only the edges requiring filling and eventually mechanical fixing on-site;
- The possibility to dispense the use of a complete surface layer coated with cement-based mortar;
- A significant reduction of initial costs with the labour required for installation when compared to the traditional method;
- Ensure the correct placement and number of mechanical fixings required for the module, should these exist.

### STATE OF THE ART

Many varied exterior façade insulating systems (ETICS) are known, made up of various common materials, namely a thermal insulation panel attached to the substrate and coated with a reinforced base coat (render system) consisting of one or more layers of mortar. These materials are applied separately and in a successive manner, which requires very specialized labour. The insulation panel is fixed to the wall structure by means of anchors, screws and profiles or a combination of bonding agents and mechanical fasteners.

The high number of operations and specialized labour required to assemble an ETICS make it the least economically competitive solution on the market, when compared to more traditional methods available.

The aim of producing the module, object of this invention, is to allow various separate materials to be joined into one module, benefiting thus from the previously mentioned characteristics.

External thermal insulation systems (ETICS) are extensively documented in technical literature. In order to protect the insulating layer and provide a good finish, the insulating layer is coated with one or more layers of cement based mortar. Usually the base layer contains a reinforcement mesh. Finishing is executed by means of painting, application of tiles or other means.

The thermal insulation panels, with a thickness that varies according to the insulation requirements, 20 to 80mm, are normally made from expanded polystyrene (EPS), extruded polystyrene (XPS), polyurethane foam (PUR), polyisocyanurate foam (PIR), insulation corkboard (ICB), mineral wool (MW), vegetable fibres agglutinated with mineral binders, cellular glass, among other materials. The insulating panels should have high rigidity, high mechanical resistance and withstand wind loads.

The thermal insulation panels will be applied to the wall surfaces by application of glue using a bead-spot or full surface method on the rear surface of the panels. Any irregularities of the wall structure should be smoothed out before bonding the insulating panels.

The wall surfaces where an ETICS will be assembled are thoroughly examined before application of the insulation panels. Mechanical fasteners are used to ensure a greater degree of safety in the application of ETICS. This situation is especially important when taller buildings are insulated due to exposure to high wind loads at higher levels and the increased weight at lower levels due to an increase in own-weight of the external thermal insulation solution.

The fasteners are usually made of polyamide and fibre-reinforced polyamide when higher loads are prevailing. The anchors have a diameter varying between 40 and 140 mm with a thickness between 2 to 5 mm. The fastener is normally mounted after the adhesive mortar has hardened. This requires the adhesive mortar to have sufficient resistance to support its own-weight and wind load. The fastener head in contact with the insulating panel surface will be slightly elevated with regards to the surface of the panel.

Another purpose for fabrication of the module, object of this invention, is to allow the head of the anchor to be flush with the thermal insulation panel's surface after fixing it to the substrate.

The tendency is for the fastener head to press into the thermal insulation material, by the screw, as is the case with soft material such as mineral wool (MW).

The exact number of fasteners depends on the height of the building and the intensity of climacteric events to which the module will be subject to. The number and specifications of the fasteners are defined in the Technical Approval documentation of each ETICS supplier.

A further purpose for fabrication of the module is to ensure the correct number and positioning of the fasteners during installation of the ETICS system on the substrate.

The cement based mortar making up the finishing coat of the external thermal insulation system is thin in those areas covering the fasteners heads when they are in contact with rigid insulation plates. It is frequent for cracking of the mortar to occur in these areas.

Yet another purpose for fabrication of the module, object of the invention, is to allow the final coat of cement based mortar to be as even as possible in order to avoid the fragility originating from the differences in thickness. At the transitions between modules a double layer of reinforcement is applied in order to minimize the effects of fragility caused by the discontinuation of the material.

Patent CN2549069Y describes an external thermal insulation wall panel whose cross-section is a layered structure made of polymeric mortar, reinforcing material, another layer of polymeric mortar, a layer of thermal insulation with concave and convex grooves. In order to reduce the amount of work there is no need for an external layer of mortar or reinforcement fibres.

Several problems arise with this invention:
- Transition between pre-fabricated modules;
- Fastening to the wall structure when wind action and weight are high.

The inexistence of a reinforcement mesh and additional layers at the transition between insulation panels during assembly does not ensure compatibility between insulating panels or their water and airtight characteristics. No mention is made with regards to cracking of the mortar.

The mechanical fasteners are not included in the invention. In situations where its use is mandatory, due to the intensity of wind action and the own-weight of the materials, the proposed panel will be transposed thus compromising water tightness and surface finish.

### DISCRIPTION OF THE INVENTION

The solution presented in this invention deals with the assembly of different types of materials making up the system into one element. The dimension of the reinforcement mesh is superior to that of the thermal insulation panels along two of the edges and is used for overlapping onto the adjacent modules. During the installation of the modules the joints between modules overlap creating a double layer of reinforcement mesh, bracing the thermal insulation panels twice thus reducing cracking of the surface coating.

The reinforcement mesh applied to the thermal insulation panel may consist of single or double layered glass fibre mesh, single or double layered carbon fibre mesh or single or double layered metallic mesh.

In case the application of mechanical fasteners becomes necessary, it is possible to fit anchors to the pre-fabricated module. The anchors are countersunk into the material by means of negatives in the insulating panel surface in order to attain an even surface after the panel is fitted. There is no need for rectification when using the reinforcement mesh and cement based mortar to ensure levelness between modules. Countersinking for the mechanical fasteners will not be filled with cement based mortar. The additional mechanical fasteners are fastened to the substrate by means of a hole that transposes the thermal insulation panel. The reinforcement mesh around the central mechanical fasteners is not continuous so that the fitted anchor does not exert tension on the reinforcement mesh of the module.

The number of fasteners of the module vary according to thermal gradients and dynamic wind loads that the module is subjected to, as well as that of the weight of the coating when installed. The number of fasteners is defined during the design stage.

The operations required on-site, for installation of the invention, are: application of the pre-fabricated module to the substrate by bonding, application of mechanical fasteners (optional) and posterior filling of the mechanical fasteners (optional) and joints between panels with cement based mortar.

Surface finish of the facade may be carried out by using various methods and materials.

References will be made in the following detailed description of the figures to help understand the invention. Their representation and description should be considered as an example and not limited to the scope of the invention.

### DESCRIPTION OF THE FIGURES

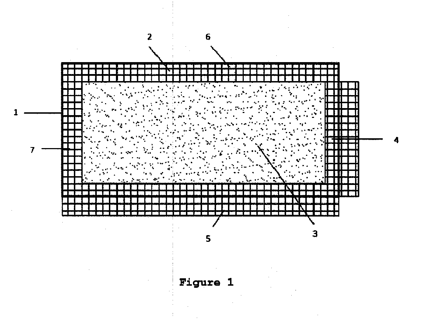

Figure 1 shows the base configuration of the pre-fabricated module for installation of an ETICS by means of bonding (not visible). The module consists of the thermal insulation panel (1) lined with reinforcing mesh (2) attached to the exterior surface with cement based mortar (3). The reinforcing mesh (2) on edges (4, 5) extends beyond the edge of the thermal insulation panel (1). The fixation of the thermal insulation panel (1) to the substrate (not visible) is carried out by means of bonding (not visible). On edges (4, 5, 6, 7) there is an area where the reinforcing mesh (2) is not bonded with cement based mortar (3) to the thermal insulation panel (1) in order to allow placement and adjustment of adjacent modules during application to the substrate (not visible).

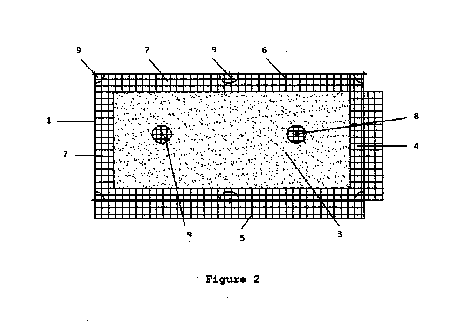

Figure 2 shows the configuration of the pre-fabricated module for installation of an ETICS by means of mechanical fasteners (not visible). The module consists of the thermal insulation panel (1) lined with reinforcing mesh (2) attached to the exterior surface with cement based mortar (3). The reinforcing mesh (2) on "male" edges (4, 5) extends beyond the edge of the thermal insulation panel (1). The mechanical fasteners (not visible) are arranged and carried out by means of holes (8) in the thermal insulation panel (1). The thermal insulation panel has negatives (9) that are countersunk into the thermal insulation panel (1) surface. The negatives (9) allow the heads of the mechanical fastening anchor (not visible) to remain flush with the exterior surface of the thermal insulation panel (1) after application. On edges (4, 5, 6, 7) there is an area where the reinforcing mesh (2) is not bonded with cement based mortar (3) to the thermal insulation panel (1). In the countersunk/negative areas (9) the reinforcing mesh (2) is not bonded with cement based mortar (3) to the thermal insulation panel (1) in order to fit the mechanical fastening anchor (not visible).

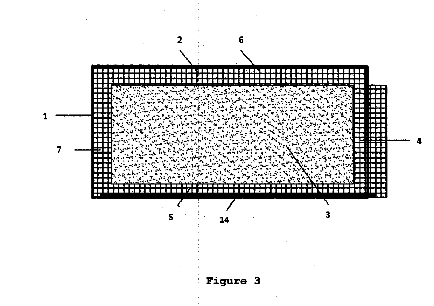

Figure 3 shows the configuration of the facade starter pre-fabricated module for installation of an ETICS. The module consists of the thermal insulation panel (1) lined with reinforcing mesh (2) attached to the exterior surface with cement based mortar (3). The reinforcing mesh (2) on the right edge (4) extends beyond the edge of the thermal insulation panel (1). The inferior edge (5) of the thermal insulation panel has a starter profile incorporated (14). The starter profile (14) has a length equal to that of the inferior edge (5) of the thermal insulation panel (1). Fitting of the starter profile (14) is offset relative to the thermal insulation panel (1) in order to allow for easier fitting of the following module during installation. Fixation of the thermal insulation panel (1) to the substrate (not visible) is carried out by means of bonding (not visible). Mechanical fasteners are used (not visible) to fasten the module in the starter profile section. On edges (4, 5, 6, 7) there is an area where the reinforcing mesh (2) is not bonded with cement based mortar (3) to the thermal insulation panel (1) in order to allow for placement and adjustment of adjacent modules during application to the substrate (not visible).

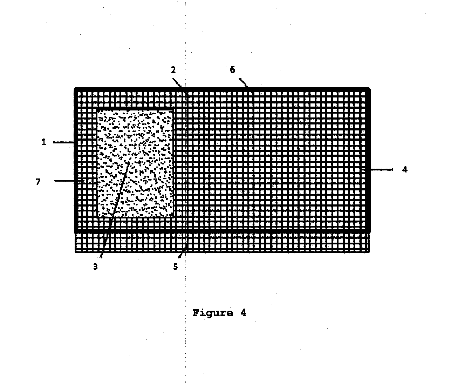

Figure 4 shows the configuration of the pre-fabricated module for application of a corner profile (not visible) to one of the edges for installation of an ETICS. The module consists of the thermal insulation panel (1) lined with reinforcing mesh (2) attached to the exterior surface with cement based mortar (3). The reinforcing mesh (2) on the inferior edge (5) extends beyond the edge of the thermal insulation panel (1). The reinforcing mesh (2) on the right edge (4) has the same length as that of thermal insulation panel (1). Application of the thermal insulation panel (1) to the substrate (not visible) is carried out by means of bonding (not visible). On edges (4, 5, 6, 7) there is an area where the reinforcing mesh (2) is not bonded with cement based mortar (3) to the thermal insulation panel (1) in order to allow for placement and adjustment of the adjacent modules during application to the substrate (not visible) and application of a corner accessory (not visible).

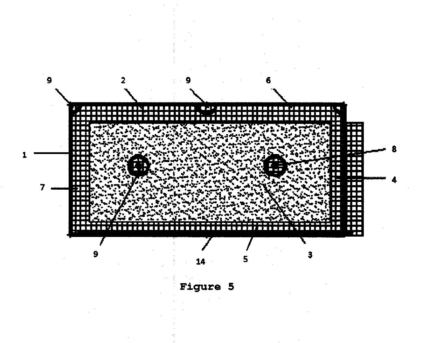

Figure 5 shows the configuration of the facade starter pre-fabricated module for installation of an ETICS. The module consists of the thermal insulation panel (1) lined with reinforcing mesh (2) attached to the exterior surface with cement based mortar (3). The reinforcing mesh (2) on the right edge (4) extends beyond the edge of the thermal insulation panel (1). The inferior edge (5) of the thermal insulation panel has a starter profile incorporated (14). The starter profile (14) has a length equal to that of the inferior edges (5) of the thermal insulation panel (1). Application of the starter profile (14) is offset relative to the thermal insulation panel (1) in order to allow for easier fitting of the following module during installation. Fixing of the thermal insulation panel to the substrate (not visible) is carried out by means of bonding (not visible) and mechanical fastening (not visible). The mechanical fasteners (not visible) are arranged and carried out by means of holes (8) in the thermal insulation panel (1). The thermal insulation material has negatives (9) that are countersunk into the thermal insulation panel (1) surface. These negatives (9) allow the heads of the mechanical fastening anchor (not visible) to remain flush with the exterior surface of the thermal insulation panel (1) after application. On edges (4, 5, 6, 7) there is an area where the reinforcing mesh (2) is not bonded with cement based mortar (3) to the thermal insulation panel (1) in order to allow for placement and adjustment of adjacent modules during application to the substrate (not visible). In the area of the negative (9) the reinforcing mesh (2) is not bonded with cement based mortar (3) to the thermal insulation panel (1) in order to install the mechanical fastening anchor (not visible).

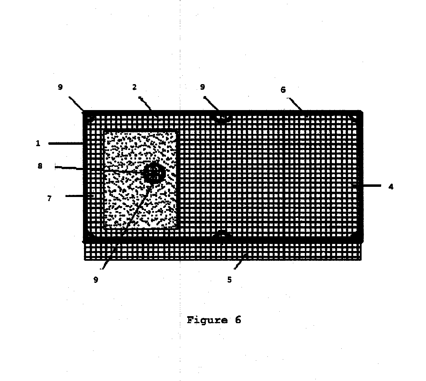

Figure 6 shows the configuration of the pre-fabricated module for application of a corner profile (not visible) to one of the edges for installation of an ETICS. The module consists of the thermal insulation panel (1) lined with reinforcing mesh (2) attached to the exterior surface with cement based mortar (3). The reinforcing mesh (2) on the inferior edge (5) extends beyond the edge of the thermal insulation panel (1). The reinforcing mesh (2) on the right edge (4) has the same length as that of thermal insulation panel (1). Fixing of the thermal insulation panel to the substrate (not visible) is carried out by means of bonding (not visible) and mechanical fastening (not visible). The mechanical fasteners (not visible) are arranged and carried out by means of holes (8) in the thermal insulation panel (1). The thermal insulation material (1) has negatives (9) that are countersunk into the thermal insulation panel (1) surface. These negatives (9) allow the heads of the mechanical fastening anchor (not visible) to remain flush with the exterior surface of the thermal insulation panel (1) after application. On edges (4, 5, 6, 7) there is an area where the reinforcing mesh (2) is not bonded with cement based mortar (3) to the thermal insulation panel (1) in order to allow placement and adjustment of the adjacent modules during application to the substrate (not visible) and application of a corner accessory (not visible). In the area of the negative (9) the reinforcing mesh (2) is not bonded with cement based mortar (3) to the thermal insulation panel (1) in order to fit the mechanical fastening anchor (not visible).

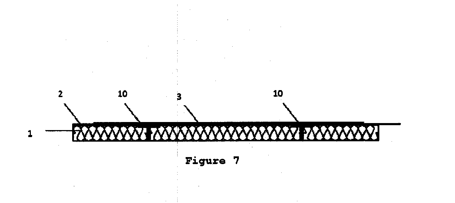

Figure 7 shows a cross-section of a standard pre-fabricated module for installation of an ETICS. (Refer to Figure 2)

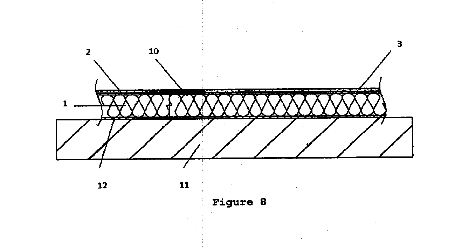

Figure 8 shows details of the installation of a pre-fabricated module. The joint (10) originating from fitting the modules to the substrate (11) by means of bonding (12) shows the connection between edges (5, 6) or (4, 7) of different modules. The transition between modules is made by overlaying reinforcing mesh (2) and filling of the joint (10) with cement based mortar (3). The joint (10) allows for joining and adjustments between adjacent modules during fitting to the substrate (11).

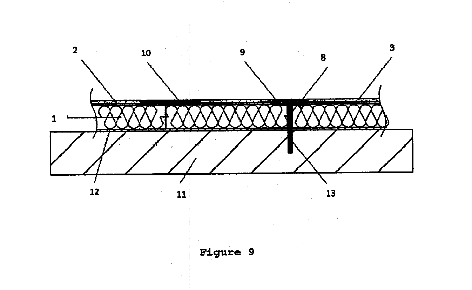

Figure 9 shows details of the installation of a pre-fabricated module. The joint (10) originating from fitting the modules to the substrate (11) by means of bonding (12) and mechanical fasteners (13) shows the connection between edges (5, 6) or (4, 7) of different modules. The transition between modules is made by overlaying reinforcing mesh (2) and the respective joints filling (10) and mechanical fasteners (13) with cement based mortar (3). The joint (10) allows for joining and adjustments between adjacent modules during fitting to the substrate (11).

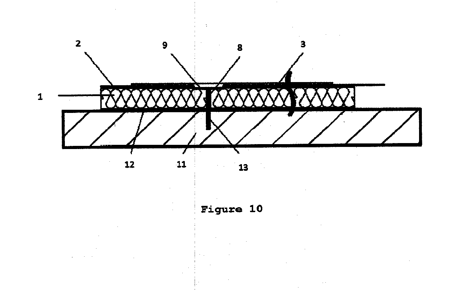

Figure 10 shows the base configuration of the pre-fabricated module for installation of an ETICS. The module consists of the thermal insulation panel (1) lined with reinforcing mesh (2) attached tc the exterior surface with cement based mortar (3). The reinforcing mesh (2) on edges (4, 6) extends beyond the edge of the thermal insulation panel (1). Fixing of the thermal insulation panel (1) to the substrate (11) is carried out by means of bonding (12) and mechanical fastening (13). The mechanical fasteners (13) are arranged and carried out by means of existing holes (8) in the thermal insulation panel (1). The thermal insulation material has negatives (9) that are countersunk into the thermal insulation panel (1) surface. These negatives (9) allow the heads of the mechanical fastening anchor to remain flush with the exterior surface of the thermal insulation panel (1) after application. On edges (4, 5, 6, 7) there is an area where the reinforcing mesh (2) is not bonded with cement based mortar (3) to the thermal insulation panel (1) in order to allow for placement and adjustment of adjacent modules during application to the substrate (not visible). In the area of the negative (9) the reinforcing mesh (2) is not bonded with cement based mortar (3) to the thermal insulation panel (1) in order to fit the mechanical fastening anchor.

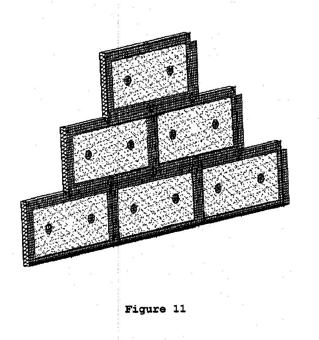

Figure 11 shows the installation of the modules described in Figure 2 and Figure 5 of this invention. The modules with starter profiles are fitted at the base of the insulation system (Figure 5) and the upper rows consist of standard modules (Figure 2). The mechanical fasteners are applied by means of holes (8) at the centre of the module and on the edges (4, 5, 6, 7) by means of insulating panel intersections (1).

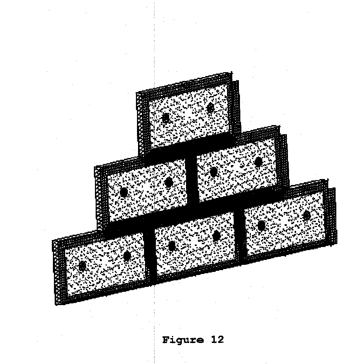

Figure 12 shows the joint layers and mechanical fasteners used to install the modules. Filling of the joints between modules (10), of the negatives (9) to mechanical installation and at the edges (4, 5, 6, 7) is made with cement based mortar (3).

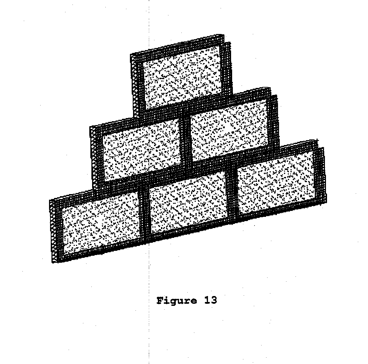

Figure 13 shows the installation of the modules defined in Figure 1 and Figure 3 of this invention. The modules with starter profiles described in Figure 3 are fitted at the base of the insulation system and the upper rows consist of standard modules (Figure 1). Fixing to the substrate is carried out by bonding to the substrate.

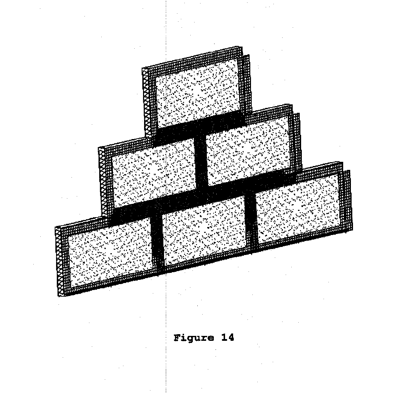

Figure 14 shows the installation joint layers of the pre-fabricated modules. Filling of joints between modules (10) on edges (4, 5, 6, 7) is carried out with cement based mortar (3). Filling with cement based mortar (3) is carried out on top of a double reinforcing mesh (2).

The diagrams presented, as well as the totality of the invention, are merely illustrative. Any required modifications, made by an expert in the field, are considered by this invention.

## Claims

1. External thermal insulation modular panel **characterized in that** it consists of thermal insulation panel (1) lined with reinforcing mesh (2) fixed to the exterior face with cement based mortar (3), with at least one of the edges (4, 5, 6, 7) being "male" in which the reinforcing mesh (2) extends beyond the edge of the thermal insulation panel (1), and having an area on edges (4, 5, 6, 7) where the reinforcing mesh (2) is not bonded to the thermal insulation panel (1) by means of cement based mortar (3).

2. Thermal insulation modular panel for external application, according to claim 1, **characterized by** the overlapping of the reinforcing mesh (2) of adjacent modules and filling of the joints (10) with cement based mortar (3), where said joint (10) originates from the application of adjacent modules to the substrate (11) with a bonding agent (12).

3. Thermal insulation modular panel, according to the preceding claims, **characterized in that** the material of the reinforcing mesh (2) applied to the thermal insulation panel may consist of single or double glass fibre mesh, single or double carbon fibre mesh or single or double glass metallic mesh, among other materials.

4. Modular thermal insulation panel, according to the preceding claims, **characterized in that** the material of the thermal insulation panel (1), may be made of, among other, mineral wool plate (MW), cellular glass plate, extruded polystyrene panel (XPS), expanded polystyrene panel (EPS), insulation corkboard (ICB), vegetable fibres agglutinated with mineral binders panel, polyurethane foam panel (PUR), polyisocyanurate foam panel (PIR), gypsum panels or fibre reinforced gypsum panels, among other materials.

5. Thermal insulation modular panel, according to the preceding claims, **characterized by** the holes (8) present in the thermal insulation panel (1) for application of mechanical fasteners (13) and by having countersunk negatives (9) thus making sure the head of the anchor (13) is flush with the exterior surface of the thermal insulation panel (1) after fitting, with no bonding of the reinforcing mesh (2) to the thermal insulation panel (1) by means of cement based mortar (3) in the countersunk/negative (9) area.

6. Thermal insulation modular panel, according to claim 5, **characterized in that** the mechanical fasteners (13) are attached to the substrate (11) through a hole (8) that transposes the thermal insulation panel (1), whereas the reinforcing mesh (2) of the central mechanical fastening area is not continuous.

7. Modular thermal insulation panel, according to claims 5 and 6, **characterized by** the mechanical fasteners on edges (4, 5, 6, 7) of the module transposing the intersections of the thermal insulation panels (1) and on the interior of the thermal insulation panels (1), in the countersunk/negative (9) area.

8. Thermal insulation modular panel, according to the preceding claims, **characterized in that** the thermal insulation panel (1) has a starter profile (14) attached to the inferior edge (5) which has a length equal to that of the inferior edge of the thermal insulation panel (1) and the starter profile (14) is offset with regards to the thermal insulation panel (1).

9. Thermal insulation modular panel, according to the preceding claims, **characterized by** the ability to receive various types of surface finishes, such as coatings, painting or spraying of various types of mortar.

10. Installation method of modular thermal insulation panels for external insulation **characterized in that** it comprises the following steps,
- Bonding of the module to the substrate
- Filling of the edges between panels with cement based mortar
- Filling of the joints (10) between modules with cement based mortar

11. Installation method of modular exterior thermal insulation panels for external insulation, in accordance with the previous claim, **characterized in that** it comprises the following optional steps:
- execution of mechanical fastening (13)
- filling of the mechanical fasteners (13) with cement based mortar (3)
- adjustments between panels
- filling of negatives (9) over the mechanical fastener heads (13) with cement based mortar (3).
